# EUROPÄISCHE PATENTSCHRIFT

(11) **EP 2 821 354 B1**
(45) Veröffentlichungstag und Bekanntmachung des Hinweises auf die Patenterteilung: **27.04.2016**
(21) Anmeldenummer: 14002304.5
(22) Anmeldetag: 04.07.2014
(51) Int. Cl.: B65G 69/28

(54) **Ausziehbare Überladebrücke zur Anbringung in einer Grube eines Hallenbodens**
Extendable loading bridge for installation in a pit of a hall floor
Pont de transbordement télescopique pour l'installation d'un plancher dans une fosse

(30) Priorität: 04.07.2013 DE 102013011147; 04.07.2013 DE 202013005987 U
(43) Veröffentlichungstag der Anmeldung: 07.01.2015
(73) Patentinhaber: Rite-Hite Holding Corporation, Milwaukee, WI 53223 (US)
(72) Erfinder: Vering, Bernd, 34471 Volkmarsen (DE); Bettendorf, Andreas, 36093 Künzell (DE)
(74) Vertreter: Samson & Partner Patentanwälte mbB

(56) Entgegenhaltungen:
- DE-A1-102007 029 149
- US-A- 4 920 598
- US-A1- 2004 177 457

## Beschreibung

Die vorliegende Erfindung betrifft eine Überladebrücke zur Anbringung in einer Grube eines Hallenbodens nach dem Oberbegriff des Anspruches 1.

Derartige Überladebrücken schaffen einen Übergang vom Hallenboden zur Ladefläche eines LKWs, damit ein Transportfahrzeug, z. B. ein Gabelstapler, bis in den LKW hineinfahren kann, um diesen zu beladen oder zu entladen. Aus der WO 2008/097813 A1 ist in den Figuren 19 bis 21 eine Ausführungsform einer solchen Überladebrücke beschrieben, bei der im Hallenboden eine Grube vorgesehen ist, welche mit einer am schwenkbaren Hallenboden angebrachten Ladeplattform abgedeckt ist. An der dem LKW zugewandten Seite der Ladeplattform ist eine horizontal verschiebbare Vorschubbrücke vorgesehen, die im ausgefahrenen Zustand auf der Ladefläche des LKW zur Auflage kommt. Mittels der Vorschubbrücke kann die Verlängerung der Ladeplattform von bis zu 1.500 mm erreicht werden. Allerdings wird für eine derartige Vorschubbrücke eine sehr aufwendige Tragkonstruktion benötigt, um die auf der Vorschubbrücke auftretenden Lasten zuverlässig aufnehmen zu können. Auch wird für die Vorschubbrücke eine Hydraulikvorrichtung zum Bewegen der Vorschubbrücke benötigt, die ebenfalls entsprechend groß dimensioniert ist. Folglich ist eine derartige horizontal verlängerbare Überladebrücke vergleichsweise kostenintensiv.

Darüber hinaus ist in der WO 2008/097813 A1 in den Figuren 1 bis 6 eine alternative Ausführungsform beschrieben, bei der an der Vorderkante der Ladeplattform eine um 90° schwenkbare Klappbrücke angebracht ist. Eine solche Klappbrücke ist sehr viel kostengünstiger zu realisieren, weil die erforderliche Tragkonstruktion sehr viel einfacher ausfallen kann. Allerdings kann mit einer solchen 90° schwenkbaren Klappbrücke lediglich eine Verlängerung der Ladeplattform von 600 mm erreicht werden.

Aus der US 7,213,285 B2 ist eine Klappbrücke bekannt, deren Hinterkante im Ruhezustand deutlich über die Ladeplattform übersteht. Mit diesem überstehenden Teil der Klappbrücke wird eine Sicherheitslippe geschaffen, die zum Beispiel von einem Gabelstapler nicht überwunden werden kann. Durch diese Sicherheitslippe ist für den Gabelstaplerfahrer eine Begrenzung der Ladeplattform im Ruhezustand realisiert, die zum Beispiel ein unbeabsichtigtes Herunterfallen des Gabelstaplers von der Ladeplattform zuverlässig verhindert.

Die DE 10 2007 029 149 A1 offenbart eine Überladebrücke nach dem Oberbegriff von Anspruch 1. Danach betrifft die bekannte Überladebrücke eine Ladebrücke für Rampen mit einem am rampenseitigen Ende um eine horizontale Achse an der Rampe schwenkbar lagerbaren Plateau , einem Rahmen zur Befestigung der Ladebrücke in einer Aussparung der Rampe und einem Hubzylinder zur Anhebung und Absenkung des Plateaus, dessen eine Ende an einem ersten Lagerpunkt an der Unterseite des Plateaus angelenkt ist, wobei das andere Ende des Hubzylinders an einem zweiten Lagerpunkt an dem Rahmen angelenkt ist, der einen grösseren Abstand von der horizontalen Achse aufweist als der erste Lagerpunkt.

Aus der US 4,920,598 ist eine Klappbrücke mit einer schwenkbaren Sicherheitslippe bekannt. Diese kann von einer vertikalen Ruheposition in eine horizontale Ladeposition bewegt werden und weist unterhalb der Klappbrücke ein Ruhelager auf, auf dem sich die Klappbrücke im Ruhezustand abstützen kann.

Die US 2004/177457 A1 offenbart eine Überladebrücke mit einem Auflager, auf welchem sich die Stützen der Überladebrücke in der Ruheposition abstützen und ausrichten können.

Davon ausgehend liegt der vorliegenden Erfindung die Aufgabe zugrunde, eine Überladebrücke der eingangs genannten Art zu schaffen, die bei einer vergleichsweise großen Verlängerung der Ladeplattform dennoch kostengünstig herstellbar ist.

Als Lösung dieser Aufgabe wird erfindungsgemäß eine Überladebrücke mit den Merkmalen des Anspruches 1 vorgeschlagen. Bevorzugte Ausführungsbeispiele dieser Überladebrücke sind den abhängigen Ansprüchen, der nachfolgenden Beschreibung und der Zeichnung zu entnehmen.

Eine nach dieser technischen Lehre ausgebildete Überladebrücke hat den Vorteil, dass durch die Anbringung einer Klappbrücke an einer Vorderkante der Vorschubbrücke bei einer vergleichsweise kleinen Vorschubbrücke dennoch eine vergleichsweise große Verlängerung der Ladeplattform erreicht wird. So kann zum Beispiel mit einer Vorschubbrücke von 500 mm und einer Klappbrücke von 500 mm bereits eine Verlängerung der Ladeplattform von 1.000 mm erreicht werden.

Ein weiterer Vorteil besteht darin, dass die vergleichsweise kleine Vorschubbrücke mit einer vergleichsweise kleinen Tragkonstruktion und einer vergleichsweise kleinen Hydraulikvorrichtung auskommt und somit kostengünstig herstellbar ist, obwohl im Gesamtergebnis durch die Addition von Vorschubbrücke und Klappbrücke eine vergleichsweise große Verlängerung der Ladeplattform erreicht wird.

Erfindungsgemäß ist zusätzlich zum Ruhelager der Klappbrücke an der Vorschubbrücke ein Stützlager ausgebildet, sodass die von der Ladeplattform aufzunehmenden Kräfte sowohl über das Ruhelager der Klappbrücke, als auch über das Stützlager der Vorschubbrücke abgeleitet werden können. Während das Ruhelager der Klappbrücke konstruktionsbedingt im Bereich der Ladeplattform angesiedelt ist, ist das Stützlager der Vorschubbrücke im Mittenbereich der Ladeplattform angesiedelt, sodass auch bei großen Ladeplattformen nur eine sehr geringe Durchbiegung derselben auftritt, eben weil die Kräfte zusätzlich über die Stützlager abgeleitet werden.

Erfindungsgemäß setzt sich das Stützlager aus einer an der Vorschubbrücke angebrachten Stütze und einem in der Grube gehaltenen Auflager zusammen. Dies hat den Vorteil, dass die Stütze nicht bis auf den Grund der Grube reichen muss, sondern lediglich bis zum Auflager. Somit kann die Stütze entsprechend kürzer ausgelegt werden, sodass ein Absenken der Ladeplattform im Ladezustand möglich ist, ohne dass die Stützen am Boden der Grube anstoßen.

Dabei hat es sich als vorteilhaft erwiesen, die Stütze derart an der Vorschubbrücke anzubringen, dass die Stütze auch im Ladezustand hinter dem Rohlager der Klappbrücke verbleibt. Hierdurch braucht die Stütze nicht an dem Ruhelager der Klappbrücke vorbeigeführt werden, was die gesamte Konstruktion deutlich vereinfacht.

Die erfindungsgemäße Ausbildung des Auflagers als durchgehenden Querträger bringt den Vorteil, dass hierdurch eine große, flächenhaftige Auflage auf dem Boden der Grube geschaffen ist, die die auftretenden Kräfte ohne große Flächenpressung ableiten kann.

In einer anderen bevorzugten Ausführungsform ist an der Vorschubbrücke ein rechtes und ein linkes Stützlager vorgesehen, wobei beide Stützen der beiden Stützenlager im Ruhezustand auf dem Querträger zur Auflage kommen. Durch die Anordnung zweier Stützen wird eine Kippbewegung der Ladeplattform verhindert, denn durch die Anbringung auf der rechten und der linken Seite der Ladeplattform ist kein Spiel mehr für eine etwaige Kippbewegung vorhanden.

Erfindungsgemäß ist am Auflager unmittelbar an der Stütze ein Anschlag vorgesehen, der ein unkontrolliertes Herausbewegen der Vorschubbrücke aus der Ruheposition verhindert. In der Ruheposition ist die Klappbrücke vertikal ausgerichtet und liegt auf dem Ruhelager auf. Der restliche Teil der Vorschubbrücke, insbesondere die Ladeplattform und die Vorschubbrücke werden über die Klappbrücke in ihrer Position gehalten. Nun kann es aufgrund von Bewegung oder Schwingungen der Ladeplattform vorkommen, dass über die Klappbrücke horizontale Kräfte an der Vorschubbrücke angreifen und diese aus ihrer Ruheposition heraus zu ziehen drohen. Die Rückhaltekräfte der Hydraulikvorrichtung reichen mitunter nicht aus, um unbeabsichtigte Vorschubbewegungen zu verhindern.

Insbesondere, wenn die Klappbrücke über die Ladeplattform übersteht und eine Sicherheitslippe bildet, besteht die Gefahr, dass beim Aufprall eines Gabelstaplers an die Sicherheitslippe horizontale Kräfte auf die Vorschubbrücke wirken und ein unbeabsichtigtes Herausziehen der Vorschubbrücke die Folge ist. Damit wäre die Sicherheitsfunktion der Sicherheitslippe aufgehoben. Um dies zu verhindern, ist am Auflager, unmittelbar an der Stütze ein Anschlag vorgesehen.

Erfindungsgemäß ist der Anschlag als ein am Querträger angebrachtes Stopperblech ausgebildet. Dieses Stopperblech ist kostengünstig in der Herstellung und einfach zu montieren.

Unter der Ladeplattform ist ein Traggestell vorgesehen, welches als Auflager für das Stützlager und als Auflager für das Ruhelager fungiert. Dabei hat es sich als vorteilhaft erwiesen, dieses Trägergestell aus einem Bereich der Klappbrücke angebrachten Frontträger und einen dahinter in der Grube angebrachten Querträger auszubilden, welche über Verbindungsstege miteinander verbunden sind. Ein solches, in sich stabiles Trägergestell kann die über die Stützlager und die Ruhelager kommenden Kräfte problemlos aufnehmen.
In einer anderen bevorzugten Ausführungsform umfasst das Ruhelager der Klappbrücke eine Vorrichtung zur Aufnahme der Klappbrücke, die im Querschnitt U-förmig ausgebildet ist. Somit kann die Klappbrücke im Ruhezustand weder vor- noch zurückgeschwenkt werden. Auch im Falle von auf die Sicherheitslippe wirkenden Kräften wird eine verschwenkende Klappbrücke auf die U-förmige Vorrichtung verhindert.

Weitere Vorteile der erfindungsgemäßen Überladebrücke ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Ansicht einer erfindungsgemäßen Überladebrücke im Ruhezustand;
- Fig. 2: eine Seitenansicht der Überladebrücke gemäß Fig. 1 im Ruhezustand;
- Fig. 3: eine Seitenansicht der Überladebrücke gemäß Fig. 1 beim Anheben einer Klappbrücke;
- Fig. 3a: eine Detailvergrößerung gemäß IIIa in Fig. 3;
- Fig. 3b: eine Detailvergrößerung gemäß IIIb in Fig. 3;
- Fig. 4: eine Seitenansicht der Überladebrücke gemäß Fig. 1 beim Ausfahren einer Vorschubbrücke;
- Fig. 5: eine Seitenansicht der Überladebrücke gemäß Fig. 1 beim Verschwenken der Klappbrücke;
- Fig. 6: eine Seitenansicht der Überladebrücke gemäß Fig. 1 im Ladezustand.

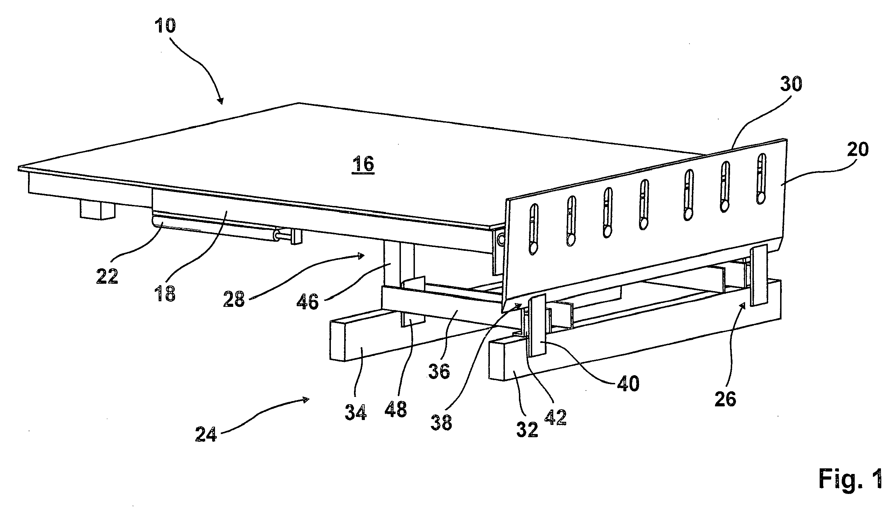

In den Figuren 1 bis 6 ist eine Ausführungsform einer erfindungsgemäßen Überladebrücke 10 dargestellt, die in eine in einem Hallenboden 12 eingelassenen Grube 14 eingesetzt ist. Diese Überladebrücke 10 umfasst eine schwenkbar am Hallenboden 12 angebrachte Ladeplattform 16, eine unter der Ladeplattform 16 gehaltene, horizontal verschiebbare Vorschubbrücke 18 und eine an einer Vorderkante der Vorschubbrücke 18 um 90° schwenkbar gehaltene Klappbrücke 20. Die Vorschubbrücke 18 ist mittels einer hier nicht näher dargestellten Tragkonstruktion horizontal verschiebbar an der Ladeplattform 16 gehalten, wobei eine ebenfalls hier nicht näher dargestellte Hydraulikvorrichtung 22 das Aus- und Einfahren der Vorschubbrücke 18 bewirkt. Unterhalb der Ladeplattform 16 mit der an der Ladeplattform gehaltenen Brücke 18 und der Klappbrücke 20 ist auf dem Boden der Grube 14 ein Traggestell 24 vorgesehen, welches unter anderem ein Ruhelager 26 zur Aufnahme einer Vorderkante der Klappbrücke 20 umfasst. Darüber hinaus ist im Inneren der Grube 14 ein Stützlager 28 vorgesehen, über welches die Vorschubbrücke 18 abgestützt ist.

In der hier dargestellten Ausführungsform ist die Klappbrücke 20 derart ausgebildet, dass sie im Ruhezustand vertikal ausgerichtet ist und dass ein Teil der Klappbrücke 20 im Ruhezustand über die Ladeplattform 16 übersteht, so dass dieser überstehende Teil der Klappbrücke 20 eine Sicherheitslippe 30 bildet. Diese Sicherheitslippe 30 stellt eine physische Begrenzung der Ladeplattform 16 dar, so dass zum Beispiel ein Gabelstapler nicht versehentlich von der Ladeplattform 16 herunterfallen kann. Eine solche Sicherheitslippe 30 ist bereits in der US 4,920,598 beschrieben worden. Bezüglich der Klappbrücke 20 wird vollinhaltlich auf diese US 4,920,598 bezuggenommen.

Das Traggestell 24 umfasst einen an der Vorderkante der Ladeplattform 16 angebrachten Frontträger 32 und einen dahinter im Inneren der Grube 14 angeordneten Querträger 34. Sowohl der Frontträger 32 als auch der Querträger 34 erstrecken sich über weite Teile der Grube 14. Der Frontträger 32 ist mit dem Querträger 34 über insgesamt vier Verbindungsstege 36 fest verbunden. An der Oberseite des Frontträgers 32 sind zwei Ruhelager 26 angebracht, die in ihrem oberen Abschnitt eine im Querschnitt U-förmige Vorrichtung zur Aufnahme der Klappbrücke 20 aufweisen. Dabei ist diese Vorrichtung zur Aufnahme der Klappbrücke 20 so angeordnet, dass eine Vorderkante der Klappbrücke 20 im Ruhezustand in dieser Vorrichtung zur Aufnahme der Klappbrücke 20 aufliegt.

In der hier dargestellten Ausführungsform ist das Ruhelager 26 durch einen vertikalen Frontsteg 40, einen winkelig gebogenen Rücksteg 42 und einen den Frontsteg 40 und den Rücksteg 42 verbindenden Quersteg 44 gebildet. Dabei sitzt das Ruhelager mit seinem Rücksteg 42 auf dem Frontträger 32 des Traggestells 24 auf. Zur dauerhaften Befestigung ist sowohl der Frontsteg 40 als auch der Rücksteg 42 am Frontträger 32 angeschweißt.

Im Inneren der Grube sind zwei Stützlager 28 vorgesehen, über die die Ladeplattform 16 und auch die Vorschubbrücke 18 im Ruhezustand abgestützt sind. Dieses Stützlager 28 umfasst zwei direkt an der Vorschubbrücke 18 angebrachte Stützen 46, die im Ruhezustand auf dem als Auflager fungierenden Querträger 34 ruhen. An einer Vorderseite des Querträgers 34 sind im Bereich der Stützen 46 Stopperbleche 48 vorgesehen, die am Querträger 34 angeschweißt oder angeschraubt sind.

Die im Ruhezustand auf dem Querträger 34 ruhenden Stützen 46 sind so dimensioniert, dass sie im Ladezustand der Überladebrücke 10 nicht bis auf den Boden der Grube 14 reichen und auch hinter dem Frontträger 32 des Traggestells 24 verbleiben.

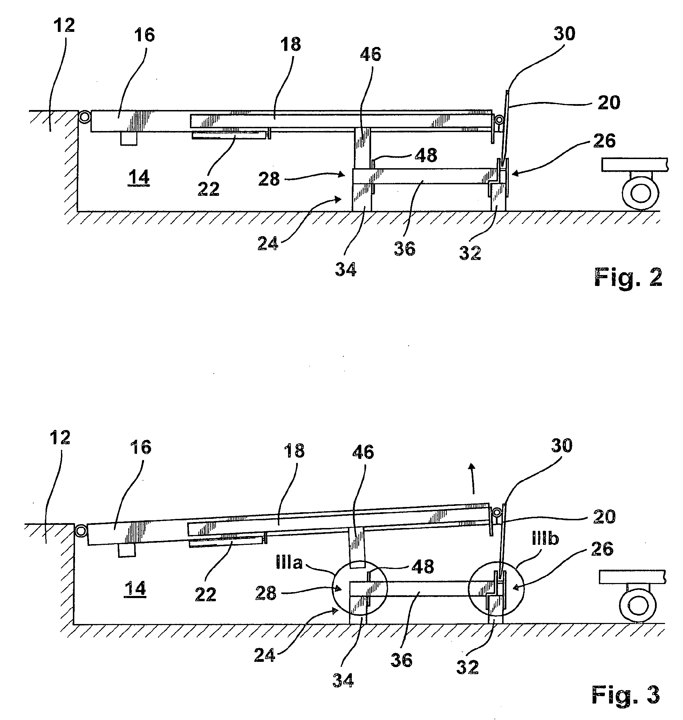

Nachfolgend ist die Funktionsweise der erfindungsgemäßen Überladebrücke kurz beschrieben:
Im Ruhezustand gemäß Fig. 1 und 2 ist die Vorschubbrücke 18 vollständig unter die Ladeplattform 16 zurückgefahren, während die Klappbrücke 20 vertikal ausgerichtet ist und mit ihrer Vorderkante in der Vorrichtung 38 zur Aufnahme der Klappbrücke des Ruhelagers 26 aufliegt. Darüber hinaus stützt sich die Vorschubbrücke 18 über die Stützlager 28 mit ihren Stützen 46 und dem Querträger 34 auf dem Boden der Grube 14 ab. In dieser Ruheposition kann die Überladebrücke 10 zum Beispiel von Gabelstaplern überfahren werden. Dabei fungiert die über die Ladeplattform 16 überstehende Klappbrücke 20 als Sicherheitslippe 30 und begrenzt somit den Bewegungsbereich des Gabelstaplers auf der Überladebrücke 10.

Für den Fall, dass ein Gabelstapler an der Sicherheitslippe 30 der Klappbrücke 20 anstößt, würden in horizontaler Richtung sehr hohe Kräfte auf die Klappbrücke 20 wirken, die zu einem unbeabsichtigten Verschwenken der Klappbrücke 20 führen können. Damit wäre dann auch die Sicherheitsfunktion der Sicherheitslippe 30 aufgehoben. Um dies zu verhindern, ruht die Vorderkante der Klappbrücke 20 in einer U-förmig ausgebildeten Vorrichtung zur Aufnahme der Klappbrücke 28, bei der die U-förmigen Stege als Anschlag für die Klappbrücke 20 dienen, sodass ein unbeabsichtigtes Verschwenken verhindert wird.

Bei einem Aufprall des Gabelstaplers an der Sicherheitslippe 30 wirken in horizontaler Richtung hohe Kräfte an der Vorschubbrücke 18, die wiederum über die Stütze 46 und das Stopperblech 48 abgeleitet werden, sodass ein unbeabsichtigtes Herausführen der Vorschubbrücke 18 verhindert wird.

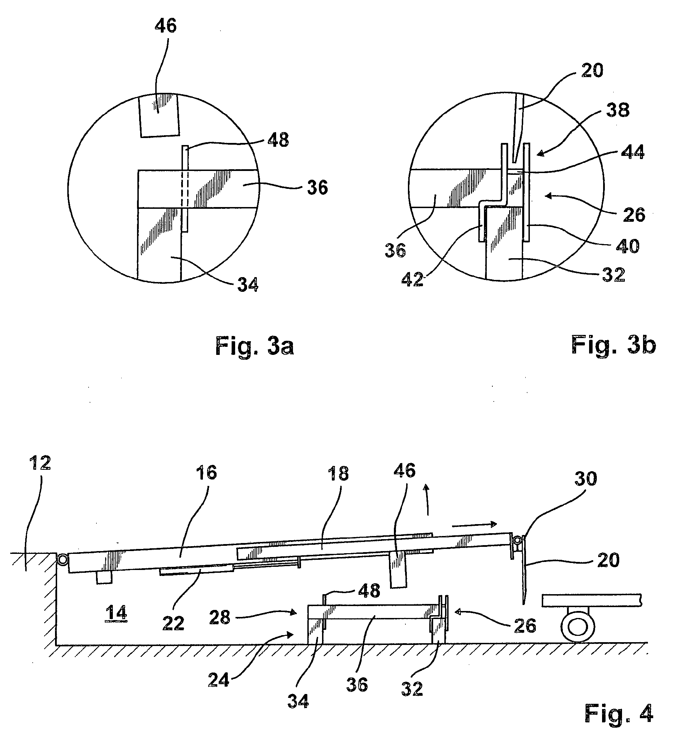

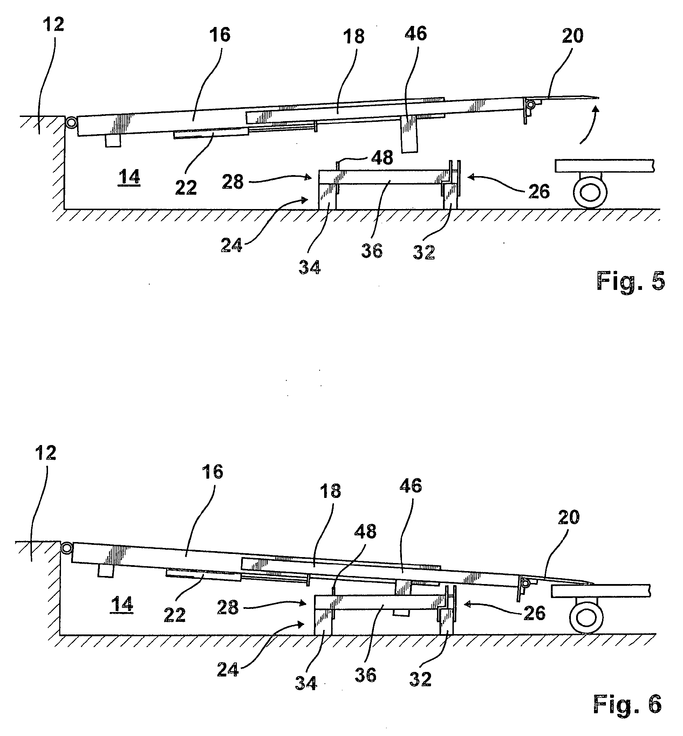

Ist ein LKW zum Be- oder Entladen vor die Überladebrücke 10 vorgefahren, so wird die Ladeplattform 16 nach oben geschwenkt, wie es in Fig. 3 dargestellt ist. In ihrer maximalen Position wird dabei die Klappbrücke 20 aus der Vorrichtung 38 zur Aufnahme der Klappbrücke herausgehoben. Gleichzeitig wird die Stütze 46 soweit angehoben, dass sie über das Stopperblech 48 reicht. Im nächsten Schritt (siehe Fig. 4) wird dann die Vorschubbrücke 18 durch die Hydraulikvorrichtung 22 horizontal nach vorne herausbewegt und die Klappbrücke 20 wird um 90° geschwenkt, sodass die Klappbrücke 20 eine Verlängerung der Vorschubbrücke 18 bildet, wie dies in Fig. 5 dargestellt ist. Abschließend wird die Ladeplattform 16 mit der ausgefahrenen Vorschubbrücke 18 und der horizontal ausgerichteten Klappbrücke 20 soweit herunterbewegt, bis eine Vorderkante der Klappbrücke 20 auf der Ladefläche des LKW aufliegt. Nun kann der LKW zum Beispiel unter Inanspruchnahme eines Gabelstaplers be- oder entladen werden.

## Patentansprüche

1. Überladebrücke zur Anbringung in einer Grube eines Hallenbodens, mit einer schwenkbar am Hallenboden (12) anbringbaren und die Grube (14) abdeckenden Ladeplattform (16), mit einer horizontal verfahrbaren, die Ladeplattform (16) im Ladezustand verlängernden Vorschubbrücke (18) und mit einer die Vorschubbrücke (18) bewegenden Hydraulikvorrichtung (22), wobei an einer Vorderkante der Vorschubbrücke (18) eine Klappbrücke (20) angebracht ist, **dadurch gekennzeichnet, dass**
die Klappbrücke (20) von einer vertikalen Ruheposition in eine horizontale Ladeposition bewegbar ist und unterhalb der Klappbrücke (20) ein Ruhelager (26) vorgesehen ist, auf dem sich die Klappbrücke (20) im Ruhezustand abstützt, zusätzlich zum Ruhelager (26) der Klappbrücke (20) an der Vorschubbrücke (18) ein Stützlager (28) ausgebildet ist, über welches sich die Vorschubbrücke (18) und/oder die Ladeplattform (16) im Ruhezustand abstützt und welches eine an der Vorschubbrücke (18) angebrachte Stütze (46) und ein in der Grube (14) gehaltenes Auflager umfasst, und
das Auflager als ein Querträger (34) ausgebildet ist und am Auflager unmittelbar an der Stütze (46) ein Anschlag (48) vorgesehen ist, der ein unkontrolliertes Herausbewegen der Vorschubbrücke (18) aus der Ruheposition verhindert, wobei der Anschlag als am Querträger (34) angebrachtes Stopperblech (48) ausgebildet ist.

2. Überladebrücke nach Anspruch 1,
**dadurch gekennzeichnet,**
**dass** die Stütze (46) zusammen mit der Vorschubbrücke (18) bewegbar ist und dass die Stütze (46) derart angeordnet ist, dass die Stütze (46) auch im Ladezustand hinter dem Ruhelager (26) der Klappbrücke (20) verbleibt.

3. Überladebrücke nach einem der Ansprüche 1 bis 2,
**dadurch gekennzeichnet,**
**dass** an der Vorschubbrücke (18) ein rechtes und ein linkes Stützlager (28) vorgesehen sind, wobei die beiden Stützen (46) der beiden Stützlager (28) im Ruhezustand auf dem Querträger (34) zur Auflage kommen.

4. Überladebrücke nach einem der vorangehenden Ansprüche,
**dadurch gekennzeichnet,**
**dass** der Querträger (34) Teil eines Trägergestells (24) ist und über mindestens zwei, vorzugsweise 4, Verbindungsstege (36) mit einem Frontträger (32) des Trägergestells (24) verbunden ist, wobei das Ruhelager (26) an der Oberseite des Frontträgers (32) und das Stopperblech (48) an einer Vorderseite des Querträgers (34) im Bereich der Stütze (46) angebracht sind.

5. Überladebrücke nach einem der vorangehenden Ansprüche,
**dadurch gekennzeichnet,**
**dass** das Ruhelager (26) der Klappbrücke (20) eine Vorrichtung zur Aufnahme der Klappbrücke (20) umfasst, in der sich die Klappbrücke (20) abstützt und dass diese Vorrichtung (38) im Querschnitt U-förmig ausgebildet ist.

6. Überladebrücke nach Anspruch 5,
**dadurch gekennzeichnet,**
**dass** die Vorrichtung zur Aufnahme der Klappbrücke (28) am Frontträger (32) des Trägergestells (24) gehalten ist.

7. Überladebrücke nach einem der vorangehenden Ansprüche,
**dadurch gekennzeichnet,**
**dass** die Klappbrücke (20) in der vertikalen Ruheposition teilweise über die Ladeplattform übersteht.

## Claims

1. Dock leveller for fitting in a pit of a building floor, having a loading platform (16), which can be fitted in a pivotable manner on the building floor (12) and covers the pit (14), having a horizontally displaceable advancement deck (18), which extends the loading platform (16) in the loading state, and having a hydraulic apparatus (22), which moves the advancement deck (18), wherein a swing-action lip (20) is fitted on a front edge of the advancement deck (18), **characterized in that**
the swing-action lip (20) can be moved from a vertical, rest position into a horizontal, loading position, and a rest-state bearing (26) is provided beneath the swing-action lip (20), the swing-action lip (20) being supported on said rest-state bearing in the rest state,
in addition to the rest-state bearing (26) of the swing-action lip (20), a supporting bearing (28) is formed on the advancement deck (18), said supporting bearing supporting the advancement deck (18) and/or the loading platform (16) in the rest state and comprising a support (46), which is fitted on the advancement deck (18), and a bearing means, which is retained in the pit (14), and
the bearing means is designed in the form of a transverse carrier (34), and a stop (48) is provided on the bearing means, directly on the support (46), said stop preventing uncontrolled movement of the advancement deck (18) out of the rest position, wherein the stop is designed in the form of a stopper plate (48) fitted on the transverse carrier (34).

2. Dock leveller according to Claim 1,
**characterized**
**in that** the support (46) can be moved together with the advancement deck (18), and in that the support (46) is arranged such that the support (46), even in the loading state, remains behind the rest-state bearing (26) of the swing-action lip (20).

3. Dock leveller according to either of Claims 1 and 2,
**characterized**
**in that** a right-hand and a left-hand supporting bearing (28) are provided on the advancement deck (18), wherein the two supports (46) of the two supporting bearings (28) come to rest, in the rest state, on the transverse carrier (34).

4. Dock leveller according to one of the preceding claims,
**characterized**
**in that** the transverse carrier (34) is part of a carrier framework (24) and is connected to a front carrier (32) of the carrier framework (24) via at least two, preferably 4, connecting crosspieces (36), wherein the rest-state bearing (26) is fitted on the upper side of the front carrier (32) and the stopper plate (48) is fitted on a front side of the transverse carrier (34), in the region of the support (46).

5. Dock leveller according to one of the preceding claims,
**characterized**
**in that** the rest-state bearing (26) of the swing-action lip (20) comprises an apparatus which is intended for accommodating the swing-action lip (20), and in which the swing-action lip (20) is supported, and in that said apparatus (38) is of U-shaped design in cross section.

6. Dock leveller according to Claim 5,
**characterized**
**in that** the apparatus for accommodating the swing-action lip (28) is retained on the front carrier (32) of the carrier framework (24).

7. Dock leveller according to one of the preceding claims,
**characterized**
**in that**, in the vertical, rest position, part of the swing-action lip (20) projects beyond the loading platform.

## Revendications

1. Passerelle de transbordement pour le montage dans une fosse d'un sol de hall, avec une plateforme de chargement (16) pouvant être montée de manière à pouvoir pivoter sur le sol de hall (12) et recouvrant la fosse (14), avec une passerelle d'avancement (18) déplaçable horizontalement, prolongeant la plateforme de chargement (16) dans l'état de chargement et avec un dispositif hydraulique (22) déplaçant la passerelle d'avancement (18), une passerelle basculante (20) étant montée sur une arête avant de la passerelle d'avancement (18), **caractérisée en ce que**
la passerelle basculante (20) est mobile entre une position de repos verticale et une position de chargement horizontale, et un support de repos (26) est prévu sous la passerelle basculante (20), sur lequel la passerelle basculante (20) s'appuie dans l'état de repos, un support d'appui (28) est réalisé sur la passerelle d'avancement (18) outre le support de repos (26) de la passerelle basculante (20), contre lequel support d'appui la passerelle d'avancement (18) et/ou la plateforme de chargement (16) s'appuie dans l'état de repos et qui comporte un support (46) monté sur la passerelle d'avancement (18) et un appui maintenu dans la fosse (14), et
l'appui est réalisé par une traverse (34) et une butée (48) est prévue sur l'appui directement contre le support (46), laquelle butée empêche un déplacement non contrôlé de la passerelle d'avancement (18) depuis la position de repos, la butée étant réalisée par une tôle d'arrêt (48) montée sur la traverse (34).

2. Passerelle de transbordement selon la revendication 1,
**caractérisée en ce que**
le support (46) est mobile conjointement avec la passerelle d'avancement (18) et **en ce que** le support (46) est agencé de telle manière que le support (46) reste aussi dans l'état de chargement derrière le support de repos (26) de la passerelle basculante (20).

3. Passerelle de transbordement selon l'une quelconque des revendications 1 à 2,
**caractérisée en ce que**
un support d'appui droit et un support d'appui gauche (28) sont prévus sur le pont d'avancement (18), les deux supports (46) des deux support d'appui (28) venant en appui dans l'état de repos sur la traverse (34).

4. Passerelle de transbordement selon l'une quelconque des revendications précédentes,
**caractérisée en ce que**
la traverse (34) est une partie d'un bâti de support (24) et est reliée par au moins deux, de préférence quatre nervures de liaison (36) à un support avant (32) du bâti de support (24), le support de repos (26) étant monté sur le côté supérieur du support avant (32) et la tôle d'arrêt (48) étant montée sur un côté avant de la traverse (34) dans la zone du support (46).

5. Passerelle de transbordement selon l'une quelconque des revendications précédentes,
**caractérisée en ce que**
le support de repos (26) de la passerelle basculante (20) comporte un dispositif pour la réception de la passerelle basculante (20), dans lequel la passerelle basculante (20) s'appuie et **en ce que** ce dispositif (38) est réalisé en section transversale en U.

6. Passerelle de transbordement selon la revendication 5,
**caractérisée en ce que**
le dispositif est maintenu pour la réception de la passerelle basculante (28) sur le support avant (32) du bâti de support (24).

7. Passerelle de transbordement selon l'une quelconque des revendications précédentes,
**caractérisée en ce que**
la passerelle basculante (20) dépasse dans la position de repos verticale en partie de la plateforme de chargement.
